(19) Europäisches Patentamt
European Patent Office
Office européen des brevets

(11) **EP 0 675 374 B1**

(12) **FASCICULE DE BREVET EUROPEEN**

(45) Date de publication et mention
de la délivrance du brevet:
**05.09.2001 Bulletin 2001/36**

(51) Int Cl.7: **G01S 13/72**, G01S 13/86

(21) Numéro de dépôt: **95400669.8**

(22) Date de dépôt: **24.03.1995**

(54) **Procédé de poursuite de mobiles**

Verfahren zur Verfolgung beweglicher Körper

Method for tracking moving bodies

(84) Etats contractants désignés:
**DE GB IT NL SE**

(30) Priorité: **30.03.1994 FR 9403795**

(43) Date de publication de la demande:
**04.10.1995 Bulletin 1995/40**

(73) Titulaire: **OFFICE NATIONAL D'ETUDES ET DE RECHERCHES AEROSPATIALES**
**92322 Chatillon Cédex (FR)**

(72) Inventeur: **Appriou, Alain**
**F-91400 Orsay (FR)**

(74) Mandataire: **Plaçais, Jean-Yves et al**
**Cabinet Netter,**
**40, rue Vignon**
**75009 Paris (FR)**

(56) Documents cités:
- **ICASSP 91 S2 VSLI U, vol.2, 14 Mai 1991, THE SHERATON CENTRE HOTEL & TOWERS , TORONTO , ONTARIO , CANADA pages 1437 - 40 SERGE PROSPERI 'New passive tracking algorithms using power information with application to passive sonar'**
- **IEEE TAES, vol.29, no.2, Avril 1993, NEW YORK , NY , USA pages 352 - 63 B. ZHOU ET N. K. BOSE 'multitarget tracking in clutter : fast algorithms for data association'**
- **IEEE TAES, vol.29, no.4, Septembre 1993, NEW YORK , NY , USA pages 1275 - 86 JEAN DEZERT ET YAAKOV BAR SHALOM 'Joint probabilistic data association for autonomous navigation'**

## Description

La présente invention concerne la poursuite de mobiles terrestres, aériens, ou marins dans un espace observé par un ou plusieurs capteurs.

Les capteurs peuvent être du type radar, radiomètre, imageur, sonar, etc. Un capteur divise l'espace observé selon un maillage qui lui est propre et qui, dans le cas du radar, est un maillage tridimensionnel permettant de définir la position du mobile en site, azimut, et distance, dans des cases de résolution.

Les procédés de poursuite connus mettent en oeuvre des fonctions de détection, de filtrage, et éventuellement de classification.

Pour chaque capteur, et lors de chaque observation, la fonction de détection affecte la présence du mobile poursuivi à une case de résolution du maillage, appelée "plot". Cette affectation, établie selon des critères prédéfinis, par exemple, dans le cas du radar, le niveau du signal rétrodiffusé par le mobile, permet de diminuer le nombre d'informations à traiter.

La fonction de filtrage associe les plots détectés lors d'observations successives. L'association de plots successifs constitue une "piste". Parmi les fonctions de filtrage les plus connues, on peut citer celles mettant en oeuvre le filtre de type Kalman, pour une poursuite limitée à un mobile, ou des variantes, plus adaptées à un contexte opérationnel avec de fortes densités de mobiles, telle que, par exemple, celle utilisant le filtre à association probabiliste de données (P.D.A.F. pour Probabilistic Data Association Filter).

La fonction de classification peut permettre de poursuivre exclusivement un mobile d'identité connue parmi un ensemble de mobiles ayant été préalablement caractérisés lors d'une étape d'apprentissage.

Il peut être intéressant d'utiliser conjointement plusieurs capteurs. L'appariement des mesures provenant des différents capteurs est alors envisagé avant ou après le filtrage, ce que l'on appelle respectivement soit "fusion de plots", soit "fusion de pistes". La technique utilisée généralement consiste, pour chaque capteur, à prendre des décisions locales concernant l'affectation d'un mobile à une case de résolution, ce qui donne une estimation de plots, propre à chaque capteur, à filtrer les plots ainsi estimés pour constituer des pistes, puis à fusionner soit les plots sélectionnés, soit les différentes pistes.

Mais les prises de décisions locales successives entraînent une perte d'informations à chaque niveau de traitement des mesures, préjudiciable à la fiabilité de la décision finale, issue de la fusion de toutes les décisions intermédiaires.

Le but de l'invention est d'améliorer les performances accessibles en matière de poursuite de mobiles, particulièrement dans les cas de forte densité de mobiles dans l'espace observé et/ou de la mise en oeuvre d'un nombre important de capteurs de différents types.

Très généralement, dans ce nouveau procédé, la fonction de détection est supprimée, permettant de prendre une décision finale centralisée intégrant l'ensemble des informations issues des différents capteurs. Les capteurs sont organisés en groupes, chaque capteur d'un même groupe présente le même maillage.

Le procédé selon l'invention comporte les étapes suivantes:

a) on prévoit un ou plusieurs capteurs, qui délivrent des signaux relatifs à la présence d'au moins un mobile, en référence à un découpage connu de l'espace, propre à chaque groupe de capteurs, en cases dites de résolution spatiales ($X^{1h}$), où l'indice 1 indique l'appartenance à un groupe de capteurs, dit groupe d'alignement, et l'indice h représente le numéro de ladite case parmi les p permises par le découpage de l'espace d'observation commun aux capteurs du groupe 1;

b) on sélectionne, par des tests logiques propres à chaque capteur, certains de ces signaux en fonction d'un critère choisi de fenêtrage, portant sur les cases de résolution;

c) on élabore une estimée de la probabilité qu'a un mobile de se trouver dans une case, qui est l'intersection des cases de résolution propres à chaque capteur, en fonction des signaux sélectionnés selon b), et de données de poursuite de trajectoire;

d) on applique cette probabilité à un filtre adaptatif de poursuite, la sortie de ce filtre fournissant un état estimé et permettant une prédiction de trajectoire pour au moins un mobile; et

e) on ajuste le critère choisi de fenêtrage en fonction de cette prédiction de trajectoire.

Selon un aspect de l'invention, l'étape c) comprend :

- c1) la mémorisation préalable de n jeux de J fonctions de distribution $F_i(M_j^{1h})$, ces n jeux étant respectivement relatifs à n identités $H_i$ de mobiles répertoriés (i = à n; j = 1 à J; J représentant le nombre de capteurs d'un groupe d'alignement), chacune de ces fonctions $F_i(M_j^{1h})$. étant représentative de la probabilité a priori $P(M_j^{1h}/H_i)$ d'observer la mesure $M_j^{1h}$ dans la case de résolution $X^{1h}$ du capteur $S_j^1$ lorsqu'un mobile d'identité H est présenté à ce capteur, et étant assortie d'un coefficient $D_{ij}^{lh}$ représentant le degré de confiance qui lui est conféré;

- c2) la détermination, à partir de chaque mesure $M_j^{1h}$ et des couples $(F_i(M_j^{1h}), D_{ij}^{1h})$ stockés dans des mémoires, de grandeurs de vraisemblance $A_{ij}^{1h}$, $B_{ij}^{1h}$, et ceci pour toutes les identités de mobiles $H_i$ répertoriées, où $A_{ij}^{1h}$ représente le ratio de vraisemblance entre les hypothèses "il y a un mobile d'identité H. dans la case $X^{1h}$" et "aucun mobile d'identité $H_i$ n'est présent dans la case $X^{1h}$", tandis que $B_{ij}^{1h}$ représente un facteur d'incertitude sur $A_{ij}^{1h}$;

- c3) la fusion, pour chaque case de résolution $X^{1h}$ et chaque identité de mobiles $H_i$, de ces couples de grandeurs de vraisemblance $(A_{ij}^{1h}, B_{ij}^{1h})$, obtenue sur l'ensemble des capteurs $(S_j^1)$ d'un même groupe d'alignement, en un couple unique de vraisemblance $(A_i^{1h}, B_i^{1h})$;

- c4) le calcul à partir des vraisemblances $(A_i^{1h}; B_i^{1h})$ relatives à une même case de résolution $X^{1h}$, de la vraisemblance $Q^{1h}$ pour qu'il y ait dans cette case $X^{1h}$ un mobile de même identité que le mobile poursuivi;

- c5) le calcul, à partir des vraisemblances $Q^{1h}$ de chaque groupe de capteurs, pour chaque case Xk, intersection des cases de résolution $X^{1h}$ considérées, de la vraisemblance Qk pour qu'il y ait dans cette case Xk un mobile de même identité que le mobile poursuivi; et

- c6) le calcul, à partir des Qk et de coefficients de poursuite ak délivrés par le filtre adaptatif de poursuite, pour chaque case Xk, de la probabilité a posteriori βK que le mobile poursuivi soit dans cette case Xk.

Dans un mode de réalisation particulièrement avantageux, lesdites étapes a) à c) comprennent la prise en compte de plusieurs jeux de signaux de fonction et de signaux-paramètres représentant des conditions d'environnement différentes et particulières, et ce sélectivement au niveau de chaque capteur $(S_j^1)$.

Selon une caractéristique importante de l'invention, les fonctions de distribution $F_i(M_j^{1h})$ et les coefficients de confiance qui leur sont associés $D_{ij}^{1h}$ résultent d'un apprentissage statistique supervisé préalable. Par ailleurs, les n fois J couples $(F_i(M_j^{1h}), D_{ij}^{1h})$ peuvent correspondre à des conditions d'observation particulières fonction de la météorologie, de l'heure, des saisons, de la géométrie d'observation, du type d'environnement, de la caractérisation physique des cibles.

Il en résulte, qu'à chaque condition d'observation particulière est associé un jeu de n fois m couples $(F_i(M_j^{1h})$, $D_{ij}^{1h})$, chaque jeu étant stocké dans des mémoires propres à une, et une seule, condition d'observation particulière.

D'autres caractéristiques et avantages de l'invention apparaîtront à l'examen de la description détaillée ci-après, et des dessins annexés, sur lesquels :

- la figure 1 illustre la géométrie d'observation d'un dispositif d'acquisition de mesures, selon l'invention, restreinte à trois capteurs, et projeté sur un plan horizontal;

- la figure 2 est une représentation schématique très simplifiée du principe général de fonctionnement du dispositif selon l'invention; et

- la figure 3 est une représentation schématique plus détaillée du dispositif selon l'invention.

Les dessins annexés sont, pour l'essentiel, de caractère certain. En conséquence, ils font partie intégrante de la description et pourront non seulement servir à compléter celle-ci, mais aussi contribuer à sa définition, le cas échéant.

Dans certains procédés connus, la fonction de filtrage est issue d'un filtre de Kalman, lequel filtre des mesures cinématiques effectuées à des instants successifs sur un mobile. Ce filtre nécessite une poursuite sans ambiguïté, et à chaque instant, d'un mobile unique, car il exige une innovation et une seule à chaque recalage de l'estimée dudit mobile, laquelle innovation représente la différence entre l'état mesuré et l'état prédit par le filtre.

Afin de pouvoir analyser des cas plus réalistes (mobiles multiples, non-détection, fausse détection due au bruit, à l'environnement, ou à des contre-mesures, ...), un certain nombre d'aménagements ont été envisagés par l'homme du métier pour tenter d'améliorer les performances du filtre de Kalman. Dans le contexte qui concerne cette invention, l'aménagement le plus intéressant est celui d'association probabiliste de données, dit "PDAF", décrit dans l'ouvrage :

Y. BAR-SHALOM : "Multi Target Multi Sensor Tracking", Volume 2, Applications and Advances, Artech House, Norwood, Chapter 9, 1992.

Dans la pratique, ce qui différencie le filtre PDAF du filtre Kalman, c'est essentiellement l'étape de mise à jour de l'estimée (état prédit par l'étape de prédiction) lors de la prise en compte de chaque nouvelle mesure. Pour effectuer, cette mise à jour, le filtre PDAF procède en deux étapes :

- il effectue un fenêtrage statistique, en sélectionnant les plots qui se trouvent au voisinage de l'estimée fournie par l'étape de prédiction, tel que la probabilité pour que le mobile soit dans ce voisinage, soit supérieure à un seuil donné, et

- il calcule l'innovation nécessaire à la mise à jour, laquelle est déterminée par combinaison linéaire des innovations calculées pour chaque plot retenu par la première étape; les coefficients de pondération de la combinaison linéaire étant les probabilités qu'ont a priori chacun de ces plots d'être effectivement le mobile poursuivi, compte tenu des probabilités de détection et de fausse alarme de chaque capteur utilisé, de la position prédite par le module de prédiction, et du seuil de fenêtrage statistique utilisé dans la première étape.

Une autre amélioration du filtre PDAF a été apportée par le document :
ICASSP 91 S2 VSLI U, vol.2, pages 1437-40, 14-05-1991, THE SHERATON CENTRE HOTEL & TOWERS, TORONTO, ONTARIO, CANADA, SERGE PROSPERI : "New passive tracking algorithme using power information with application to passive sonar".

Ce document enseigne la prise en compte, dans les coefficients de pondération, du rapport signal sur bruit. Il utilise la vraisemblance probabiliste, en présence d'un mobile d'identité unique, selon deux hypothèses, présence ou absence d'un mobile de cette identité.

Malgré ces améliorations, le filtre PDAF présente un certain nombre de limitations pour le problème de poursuite de trajectoire de mobiles, limitations qui sont plus ou moins pénalisantes selon les applications du filtre :

- il opère une fusion dans le temps et dans l'espace de décisions décentralisées quant à la présence ou à l'absence d'un mobile à un instant et un endroit donnés; il en résulte une perte d'informations et donc de performance par rapport à un procédé qui permettrait une fusion centralisée de l'ensemble des mesures discriminantes délivrées par les différents capteurs; cela pénalise la poursuite d'un mobile parmi d'autres mobiles proches spatialement et d'identités différentes;

- il nécessite le choix d'un seuil optimal de détection, et la connaissance des probabilités de détection et de fausse alarme qui en résulte;

- il ne permet pas, de par la structure du traitement mis en oeuvre, d'évaluer la qualité de la piste sélectionnée en temps réel, au sens de la vraisemblance pour qu'un mobile d'identité connue soit effectivement: à chaque instant dans la fenêtre de validation;

- il ne permet pas formellement, en présence de mobiles multiples d'identités différentes dans la fenêtre de validation, d'utiliser la vraisemblance probabiliste d'hypothèses de classification du signal au sein du filtre, pour assurer la poursuite d'un mobile donné; et

- il ne permet pas de résoudre les problèmes d'association de mesures provenant de certains types de capteurs disparates, sans recourir, soit à un filtre non-linéaire souvent instable, soit à la synthèse de pseudo-mesures 3D par triangulation, lesquelles peuvent générer des mobiles fantômes (fausses associations de plots).

Afin d'accroître les performances du filtre de type PDAF, le Demandeur a développé le présent procédé de poursuite de trajectoire de mobiles, et intégré ledit filtre PDAF dans le dispositif décrit ci-après.

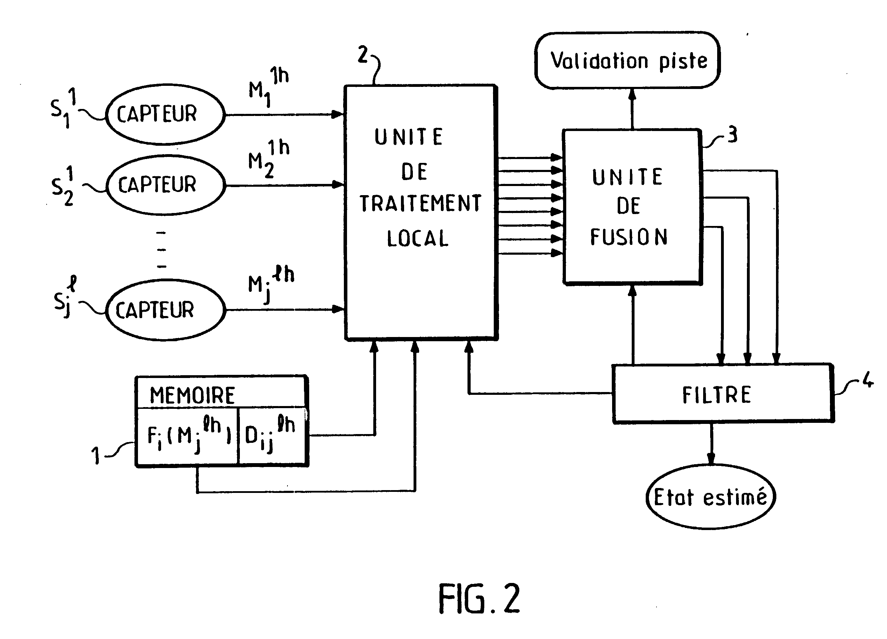

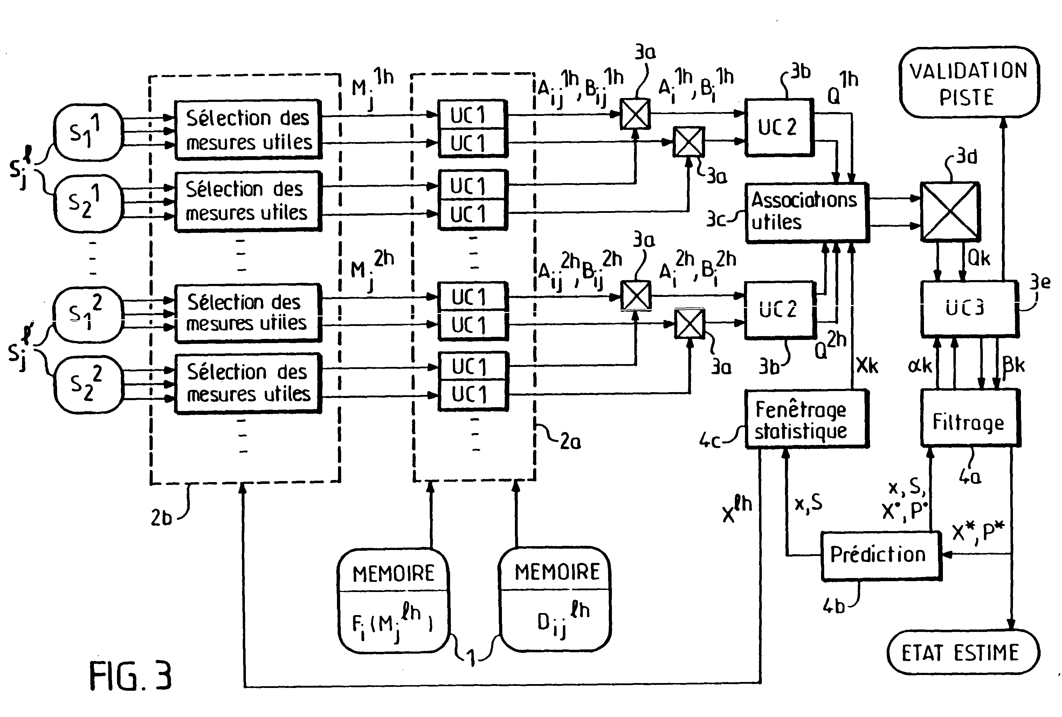

Pour illustrer ce dispositif, il est maintenant fait référence aux figures 2 et 3.

Il convient d'expliciter d'abord la terminologie utilisée.

- deux capteurs sont dits alignés s'ils fournissent des découpages de leur espace propre d'observation en cases de résolution spatiale $X^{1h}$ identiques sur la fenêtre de validation, ainsi les capteurs $S_j^1$ et $S_{j'}^{1'}$ seront alignés si leurs indices respectifs 1 et 1' sont identiques (1 est l'indice du groupe d'alignement du capteur) et si j est différent de j' (j est l'indice du capteur dans son groupe d'alignement); et

- deux capteurs sont dits "non-alignés" dans le cas contraire, comme par exemple deux capteurs de natures différentes ou de cases de résolution non strictement identiques; ainsi deux capteurs $S_j^1$ et $S_{j'}^{1'}$ seront dits non alignés si leurs indices respectifs 1 et 1' sont différents, quels que soient j et j'.

Dans la suite de la description, nous noterons par convention $S_j{}^1$ les capteurs alignés d'un même groupe d'indice 1, et $S_{j,}{}^{1'}$ les capteurs alignés d'un autre groupe d'indice 1'.

Par ailleurs, l'espace est découpé en cases de résolution spatiales $X^{1h}$ où l'indice 1 indique l'appartenance à un groupe de capteurs, dit groupe d'alignement, et l'indice h représente le numéro de ladite case parmi les p permises par le découpage de l'espace d'observation commun aux capteurs du groupe 1.

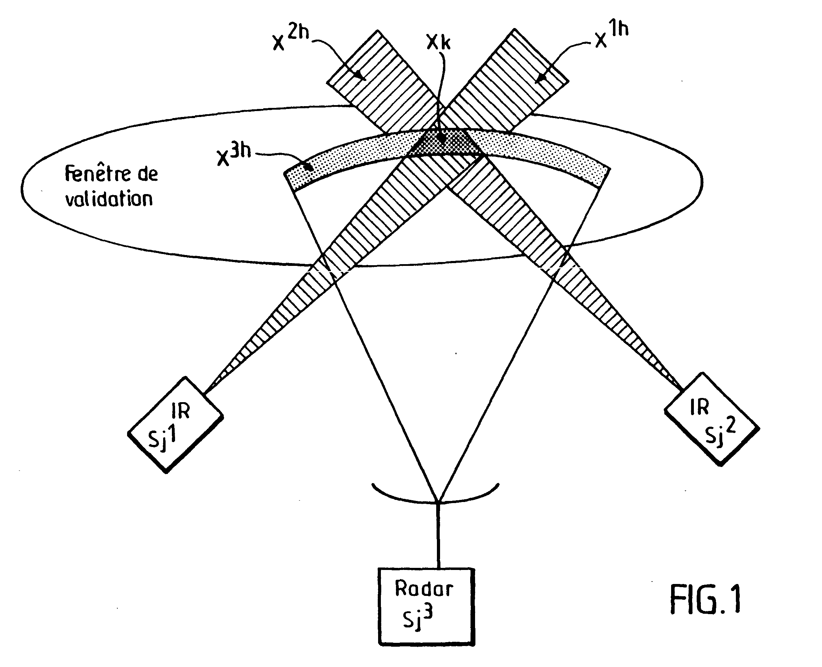

Comme cela est illustré sur la figure 1, on note Xk les cases de résolution obtenues par intersection des cases de résolution $X^{1h}$ de l'ensemble de tous les capteurs appartenant à des groupes d'alignement d'indices 1 différents. Sur cette figure 1, sont représentés deux capteurs infrarouge ($S_j{}^1$ et $S_j{}^2$) non alignés, et un radar ($S_j{}^3$), ainsi que leurs cases de résolution respectives $X^{1h}$, $X^{2h}$ et $X^{3h}$. Xk représente l'intersection de ces trois cases.

Le dispositif selon l'invention comprend cinq parties distinctes et interconnectées. Leur description est donnée ci-après :

1) La première partie comprend un nombre quelconque de capteurs $S_j{}^1$, alignés ou non, localisés ou non, et qui peuvent différer par leur nature, et leur capacité de localisation (résolution spatiale de la mesure). Chaque capteur $S_j{}^1$ fournit une mesure $M_j{}^{1h}$ ou un jeu de mesures discriminantes quant à l'identité de l'objet observé, et pour chacune de ses cases de résolution $X^{1h}$ accessibles.

2) La seconde partie comprend des mémoires 1, qui contiennent les fonctions de distribution $F_i(M_j{}^{1h})$ représentatives de chaque probabilité a priori $P(M_j{}^{1h}/H_i)$ d'observer la mesure $M_j{}^{1h}$, si un mobile d'identité $H_i$ se trouvait dans la case de résolution $X^{1h}$ du capteur $S_j{}^1$; ces fonctions sont obtenues par apprentissage préalable, statistique et supervisé, des histogrammes de répartition des valeurs possibles des $M_j{}^{1h}$ pour les différentes identités de mobiles $H_i$ répertoriés. Les mémoires 1 contiennent en outre les coefficients de confiance $D_{ij}{}^{1h}$ associés à chaque fonction de distribution $F_i(M_j{}^{1h})$. Chaque coefficient de confiance caractérise la plus ou moins bonne représentativité de la fonction de distribution associée, compte tenu de la plage d'évolution possible des conditions d'observation; les $D_{ij}{}^{1h}$ sont appris de façon supervisée pour optimiser les performances du procédé; la procédure d'optimisation est spécifique à chaque application (capteurs, finalité du procédé, conditions opérationnelles). Chaque mémoire 1 contient n fois J couples ($F_i(M_j{}^{1h})$, $D_{ij}{}^{1h}$), correspondant à une et une seule condition d'observation particulière.

L'apprentissage des couples ($F_i(M_j{}^{1h})$, $D_{ij}{}^{1h}$) et leur mémorisation pourront utiliser tout dispositif connu par l'homme du métier, qui sait parfaitement maîtriser ce type d'opération.

3) La troisième partie comprend une unité de traitement locale 2 de chaque mesure $M_j{}^{1h}$ permettant d'évaluer, à l'aide des couples ($F.(M_j{}^{1h})$, $D_{ij}{}^{1h}$) contenus dans les mémoires 1, la vraisemblance pour qu'il y ait un mobile d'identité donnée dans la case de résolution $X^{1h}$ du capteur $S_j{}^1$, et cela pour toutes les identités répertoriées a priori $H_i$ pour les mémoires 1.

4) La quatrième partie comprend une unité de fusion 3 des vraisemblances délivrées par l'unité de traitement locale 2, permettant d'élaborer une vraisemblance de localisation de la cible poursuivie, sur la base de l'ensemble des observations effectuées à l'instant courant. Cette vraisemblance est calculée pour chaque case de résolution Xk se trouvant à l'intérieur d'une fenêtre de poursuite définie par un filtre 4 selon la technique du fenêtrage statistique dit du PDAF. De plus, cette unité de fusion 3 fournit de façon immédiate un critère permettant de valider ou d'invalider la piste traitée, en évaluant à partir des mesures la vraisemblance pour qu'un mobile d'identité correcte soit effectivement à l'intérieur de la fenêtre de poursuite.

5) La cinquième partie comprend le filtre de poursuite 4 qui est une adaptation de la technique dite PDAF à une prise en compte optimisée des informations élaborées par les unités précédentes 2 et 3. L'homme du métier sait qu'un filtre de type PDAF est constitué de trois modules : un module de prédiction 4b, un module de fenêtrage statistique 4c, et un module de mise à jour du filtre 4a. Le procédé selon l'invention utilise les modules de prédiction 4b et de fenêtrage statistique 4c de façon classique, ledit module de fenêtrage statistique 4c permettant la mise en oeuvre d'une logique de sélection des cases de résolution $X^{1h}$ à traiter. En revanche, le module de mise à jour du filtre 4a correspond à un mode de fonctionnement du PDAF où l'on choisirait un seuil minimal qui retiendrait sans sélection toutes les cases de la fenêtre de validation, ce qui revient à imposer une probabilité de détection égale à la probabilité de fausse alarme, égale à 1. L'innovation unique nécessaire aux filtres de type Kalman est alors donnée par la combinaison linéaire des innovations calculées sur chacune des cases de résolution $X^{1h}$ à l'intérieur de la fenêtre de poursuite, sans discrimination. Le poids donné à chacune de ces innovations dans la combinaison linéaire, représentatif de la probabilité qu'a chacune d'elles de correspondre effectivement au mobile poursuivi, est alors déterminé, d'une part à partir du poids classiquement utilisé par le PDAF où l'on impose à la probabilité de détection d'être égale à 1, et d'autre part à partir des vraisemblances de localisation du mobile poursuivi, élaborées par l'unité de fusion 3 précédente. Ce filtre 4 permet de calculer l'état estimé du mobile qui fait l'objet du suivi de trajectoire.

A ces différents éléments peut être ajoutée une unité de calcul supplémentaire (non représentée) réalisant l'identification des conditions d'observation, à partir des mesures $M_j^{1h}$ et d'informations externes, permettant alors de sélectionner les mémoires contenant les n fois J couples $(F_i(M_j^{1h}), D_{ij}^{1h})$ les mieux adaptés.

Enfin, l'ajout d'une unité logique (non représentée) à ces différents éléments peut permettre un seuillage en tête de certaines mesures $M_j^{1h}$, afin de limiter le nombre de cases de résolution à traiter, en éliminant celles pour lesquelles le signal observé apporte d'emblée la quasi-certitude qu'elles ne contiennent pas le mobile; ceci peut permettre de limiter la masse de traitements à effectuer, sans pour autant dégrader sensiblement les performances du système.

On décrit maintenant dans le détail l'unité de traitement locale 2, l'unité de fusion 3, et le filtre de poursuite 4 afin de mettre en évidence l'originalité de la présente invention.

a) L'unité de traitement locale 2 comprend une première unité logique 2b qui met en oeuvre des tests logiques, propres à la nature de chaque capteur $S_j^1$, visant à sélectionner les mesures $M_j^{1h}$ qui sont associées aux cases de résolution $X^{1h}$ d'intersection non vide avec la fenêtre de validation fournie par le filtre de poursuite 4. La première unité logique 2b est interconnectée à une première unité de calcul 2a, laquelle met en parallèle des unités de calcul primaires UC1 propres à traiter, à un instant donné, une mesure et une seule issue d'un capteur $S_j^1$ donné. Ces unités de calcul UC1 jouent un double rôle :

a1) elles permettent la sélection, dans la mémoire 1, de la valeur $F_i$ correspondant à la mesure $M_j^{1h}$ sélectionnée, pour des conditions d'observation identifiées. La valeur $F_i(M_j^{1h})$ fournie est donc représentative de la probabilité a priori $P(M_j^{1h}/H_i)$ d'observer la mesure $M_j^{1h}$ effectivement relevée, si un mobile d'identité $H_i$ se trouve dans la case de résolution $X^{1h}$ du senseur $S_j^1$.

a2) elles assurent la véritable étape de traitement local en élaborant, à partir de chaque mesure $M_j^{1h}$ et des couples $(F_i(M_j^{1h}), D_{ij}^{1h})$ sélectionnés, la vraisemblance pour qu'un mobile d'identité $H_i$ soit dans la case $X^{1h}$, et ceci pour toutes les identités $H_i$ répertoriées a priori. Cette vraisemblance est exprimée par un couple de valeurs $(A_{ij}^{1h}, B_{ij}^{1h})$ où :

-   $A_{ij}^{1h}$ représente un rapport de vraisemblance entre l'hypothèse : "il y a un mobile d'identité $H_i$ dans la case $X^{1h}$", et l'hypothèse contraire : "il n'y a pas de mobile d'identité $H_i$ dans la case de résolution $X^{1h}$"; et

-   $B_{ij}^{1h}$ est un facteur d'incertitude sur $A_{ij}^{1h}$.

Ces valeurs sont préférentiellement calculées à l'aide d'expressions dont l'optimalité théorique a été établie sur la base de la théorie de l'évidence élaborée par Dempster et Shafer, décrit dans l'ouvrage :

G. Shafer : "Mathematical Theory of Evidence", Princeton University Press, 1976.

Les travaux ainsi réalisés ont permis de formaliser le traitement qu'il convenait d'appliquer aux couples $(F_i(M_j^{1h}), D_{ij}^{1h})$ pour élaborer les informations les mieux adaptées à une fonction de filtrage. Pour calculer ces valeurs $A_{ij}^{1h}$ et $B_{ij}^{1h}$, l'alternative suivante est alors envisageable :

-   <u>Cas 1 :</u>

$$A_{ij}^{1h} = [1 - D_{ij}^{1h} + R_j^{1h} * F_i(M_j^{1h})]/C_{ij}^{1h}$$

$$B_{ij}^{1h} = (1 - D_{ij}^{1h}) * [1 + R_j^{1h} * F_i(M_j^{1h})]/C_{ij}^{1h}$$

avec :

$$C_{ij}^{1h} = 1 + (1 - D_{ij}^{1h}) * R_j^{1h} * F_i(M_j^{1h})$$

$R_j^{1h}$ = gain de normalisation quelconque, commun à toutes les hypothèses d'identité, simplement contraint

par :

$$O < R_j^{1h} < \{ \max [F_i(M_j^{1h})]\}^{-1}$$

- Cas 2 :

$$A_{ij}^{1h} = B_{ij}^{1h} = 1 - D_{ij}^{1h} + D_{ij}^{1h} * R_j^{1h} * F_i(M_j^{1h})$$

où le gain $R_j^{1h}$ est défini comme pour le cas 1.

Les couples de valeurs $(A_{ij}^{1h}, B_{ij}^{1h})$ issus de chaque unité de calcul UC1 sont alors traités par l'unité de fusion 3 décrite ci-après.

b) L'unité de fusion 3 de la figure 2 comprend les cinq groupes d'éléments décrits ci-après.

b1) Un groupe de premiers multiplicateurs 3a réalise la fusion entre les capteurs $s_j^1$ alignés. Pour chaque case de résolution commune $X^{1h}$, ils fusionnent les vraisemblances $(A_{ij}^{1h}, B_{ij}^{1h})$, fournies par les différentes unités de calcul secondaires UC1 propres à chacun de ces capteurs $s_j^1$, en une vraisemblance unique $(A_i^{1h}, B_i^{1h})$ strictement de même type. Pour cela, les multiplicateurs 3a réalisent les produits :

$$A_i^{1h} = \prod_j A_{ij}^{1h},$$

et

$$B_i^{1h} = \prod_j B_{ij}^{1h},$$

lesquels seront ensuite traités par des unités de calcul secondaire 3b décrites ci-après.

b2) Les unités de calcul secondaires 3b, propres à chaque groupe de capteurs alignés $S_j^1$, élaborent, à partir des vraisemblances $(A_i^{1h}, B_i^{1h})$ délivrées par les différents multiplicateurs 3a de ce groupe de capteurs $S_j^1$, et relatives à une même case de résolution $X^{1h}$, la vraisemblance $Q^{1h}$ pour qu'il y ait, dans cette case de résolution $X^{1h}$, un mobile de même identité que le mobile poursuivi; chaque unité de calcul secondaire 3b calcule de la sorte $Q^{1h}$ pour chaque case de résolution sélectionnée par la première unité logique 2b, c'est-à-dire d'intersection non vide avec la fenêtre de validation. Le nombre d'hypothèses d'identités $H_i$ répertoriées est n, et par convention de notation l'identité poursuivie est $H_n$. Les calculs préférentiellement mis en oeuvre, optimisés sur la base de la théorie de l'évidence, amènent ici à distinguer deux cas pour le calcul de $Q^{1h}$ :

- soit $X^{1h}$ est entièrement inclus dans la fenêtre de validation; et alors la vraisemblance $Q^{1h}$ correspondante est donnée par :

$$Q^{1h} = A_n^{1h} / [1 - \prod_{i \in [1;n-1]}(1 - B_i^{1h}) + \sum_{i \in [1;n-1]}(A_i^{1h} - B_i^{1h})]$$

- soit $X^{1h}$ n'est que partiellement inclus dans la fenêtre de validation; et alors la vraisemblance $Q^{1h}$ corres-

pondante est donnée par :

$$Q^{1h} = A\,n^{1h}/[1 - \prod_{i \in [1;n]}(1 - B_i^{1h}) + \sum_{i \in [1;n]}(A_i^{1h} - B_i^{1h})]$$

Les vraisemblances ainsi calculées sont ensuite traitées par une seconde unité logique 3c décrite ci-après.

b3) La seconde unité logique 3c détermine, par des tests logiques propres à la nature des capteurs considérés $S_j^1$, les associations de cases de résolution $X^{1h}$, entre les groupes de capteurs alignés, dont l'intersection Xk est à l'intérieur de la fenêtre de validation. Les associations de cases $X^{1h}$ vont ensuite servir à un second multiplicateur 3d décrit ci-après.

b4) Le second multiplicateur 3d part des différentes vraisemblances $Q^{1h}$ que chaque groupe de capteurs alignés affecte aux différentes cases de résolution $X^{1h}$ particulières, et détermine une vraisemblance Qk, strictement de même type, portant sur une case de résolution Xk qui est l'intersection des $X^{1h}$ considérés. Cette détermination est effectuée pour toutes les associations de cases de résolution $X^{1h}$ retenues par l'unité logique 3c, et dont les intersections Xk sont contenues dans la fenêtre de validation déterminée par un module de fenêtrage statistique 4c.
Pour cela le multiplicateur 3d réalise les produits :

$$Qk = \prod_1 Q^{1h},$$

lesquels serviront à une troisième unité de calcul 3e, décrite ci-après.

b5) La troisième unité de calcul 3e fournit ensuite, pour chaque case de résolution Xk traitée, une grandeur βk représentative de la probabilité a posteriori qu'a le mobile poursuivi d'être dans cette case Xk; cette troisième unité de calcul 3e fournit également une probabilité β0 qu'a le mobile d'être en dehors de la fenêtre de validation. Chaque βk (dont β0) est déterminé à partir : d'une part de l'ensemble des vraisemblances Qk délivrées par le second multiplicateur 3d, et d'autre part de l'ensemble des coefficients ak traditionnellement utilisés par le PDAF, ici utilisé comme s'il fonctionnait avec la condition suivante :
probabilité de détection = probabilité de fausse alarme = 1

Les coefficients αk, utilisés par cette unité de calcul 3e, sont fournis par le module de filtrage 4a (cf. ci-dessous). La troisième unité de calcul 3e met donc en oeuvre les calculs ci-après afin de déterminer les βk :

$$\beta 0 = \alpha 0/[\alpha 0 + \sum_{k \neq 0}(Qk * \alpha k)];$$

$$\beta k = Qk * \alpha k/[\alpha 0 + \sum_{k \neq 0}(Qk * \alpha k)];$$

Cette unité de calcul 3e permet de valider ou d'invalider la piste traitée par simple test logique sur les βk. Trois options permettent alors de valider la piste :

- si β0 est inférieur à un seuil donné,

- si le βk maximal sur l'ensemble des Xk est supérieur à un seuil donné,

- pour toute combinaison des deux tests précédents.

Muni des probabilités βk, le filtre de poursuite 4, décrit ci-après, peut alors commencer son travail.

c) Le filtre de poursuite 4 de la figure 2 comprend trois modules interconnectés, qui mettent en oeuvre les techniques du PDAF.

c1) Le module de filtrage 4a détermine les coefficients de poursuite αk nécessaires au calcul des probabilités βk, lesquelles sont calculées par la troisième unité centrale 3e, et fournit un état estimé X* et sa covariance P* après mise à jour du filtre 4.

c1-a) Les coefficients αk sont calculés en imposant à la probabilité de détection d'être égale à 1, et sont donnés par :

$$\alpha 0 = N * (2\ \Pi/\gamma)^{m/2} * (1 - Pg)/Cm$$

$$\alpha k = \exp\left[-\ 0{,}5 * (xk - x)^T * S^{-1} * (xk - x)\right]$$

où :

$$Cm = \Pi^{m/2}/\Gamma(1 + m/2)$$

$\Gamma$ est la fonction gamma bien connue en mathématiques

m = dimension de x et Xk,

Pg = probabilité a priori pour que le mobile soit dans la fenêtre de validation, prédéfinie par un seuil, γ, du module de fenêtrage 4c, (cf. ci-dessous).

xk = position de la case de résolution Xk,

N = nombre de cases de résolution Xk dans la fenêtre de validation,

x,S = mesure de position prédite et sa covariance, fournies par le module de prédiction 4b (cf. ci-dessous).

c1-b) La mise à jour de l'état du filtre 4 est calculée comme suit :

$$X^* = X^0 + G * z$$

$$P^* = \beta 0 * P^0 + (1 - \beta 0) * (1 - G^*H) * P^0 + P'$$

où :

$$P' = G * \left[\sum_{k \neq 0} \beta k * zk * zk^T\right) - z * z^T\right] * G^T$$

L'exposant T représente la transposée de la matrice concernée.

$$zk = xk - x$$

$$z = \sum_{k \neq 0}(\beta k * zk) \qquad (= \text{innovation du filtre 4})$$

$$G = P^0 * H^T * S^{-1} \qquad (= \text{gain du filtre 4})$$

X' P' = état estimé et sa covariance, après mise à jour du filtre 4,

$X^0$, $P^0$ = état prédit et sa covariance, fournis par le module de prédiction 4b (cf. ci-dessous),

H = matrice d'observation de la poursuite (x = H * X) où x est la mesure de la position et X l'état du filtre 4),

x, S = mesure de position décrite et sa covariance, fournies par le module de prédiction 4b (cf. ci-dessous).

L'état estimé (X*, P*) est ensuite utilisé par un module de prédiction décrit ci-après.

c2) Le module de prédiction 4b détermine l'état prédit $X^0$ et sa covariance $P^0$, nécessaires à la mise à jour du module de filtrage 4a, à partir de l'état estimé (X*, P*) à l'instant précédent par ledit module de filtrage 4a, ainsi qu'une mesure de position prédite x et sa covariance S, nécessaires à la fois au module de filtrage 4a et au module de fenêtrage statistique 4c. Les grandeurs calculées par le module de prédiction 4b sont données ci-dessous :

$$X^0 = F * X^*$$

$$P^0 = F * P^* * F^T + Q$$

où :

F = matrice de transition de l'état d'un instant d'observation à l'instant suivant,

Q = matrice de covariance de bruit sur l'état.
Et

$$x = H * X^0$$

$$S = H * P^0 * H^T + R$$

où R est la matrice de covariance de bruit sur la mesure, et H la matrice d'observation
La position prédite (x, S) sert enfin au module de fenêtrage statistique k, décrit ci--après.

c3) Le module de fenêtrage statistique 4c sélectionne, à partir de la position prédite (x, S) par le module de prédiction 4b, des cases de résolution Xk de l'espace à traiter, qui déterminent une fenêtre de validation. Ce module préside au test mis en oeuvre par la première unité logique 2b et la seconde unité logique 3c. Ladite sélection des positions Xk est assurée par le test logique suivant :

$$(xk - x)^T * S^{-1} * (xk - x) \geq \gamma$$

où :

x,S = mesure de position prédite et sa covariance, fournies par le module de prédiction 4b,

$\gamma$ = seuil prédéterminé pour satisfaire une probabilité a priori Pg donnée pour que la cible poursuivie soit à l'intérieur de la fenêtre de validation.

Le procédé selon l'invention présente, par rapport à l'état de l'art, un certain nombre d'avantages fonctionnels qui permettent d'améliorer les performances accessibles (précision de poursuite, extraction-validité-gestion des pistes, taux de reconnaissance des cibles) et les configurations gérables (types et associations de capteurs, géométries d'observation, densités d'environnement).
Les principaux avantages offerts par le procédé sont énoncés ci-après :

- une fusion centralisée espace/temps/capteurs des évaluations, sans aucune perte d'information (pas de prise de décision ni de quantification à quelque niveau que ce soit);

- une mise en oeuvre de la classification des mobiles au niveau amont du signal, et une intégration directe des évaluations correspondantes au sein du filtre de poursuite. Ceci permet en particulier de gérer des batteries de filtres adaptées à différentes identités de mobiles. La classification permet ainsi d'améliorer la poursuite, et vice versa;

- une gestion pertinente de l'incertain : le manque de maîtrise des filtres de poursuite du type PDAF, au niveau du choix du seuil de détection et de l'évaluation de la probabilité de détection, est ici reporté sur un éventuel défaut de représentativité des apprentissages des fonctions de distribution $F_i(M_j^{1h})$, et maîtrisé au mieux par l'apprentissage des coefficients de confiance $D_{ij}^{1h}$ et un traitement approprié de l'incertain basé sur la théorie de l'évidence;

- l'évaluation, à partir des mesures, d'un critère de validité de la piste traitée traduisant la vraisemblance pour qu'un mobile d'identité correcte soit effectivement à l'intérieur de la fenêtre de poursuite; et

- la prise en compte, par le filtre, de toutes les associations possibles de signaux provenant de différents capteurs et l'évaluation la plus fine de leur vraisemblance pour la poursuite traitée, ceci au profit de la précision de localisation, de la stabilité du filtre, et de la gestion des ambiguïtés d'associations entre cases de résolution de capteurs non alignés.

Dans la présente description, le mot "capteur" est associé au fait de délivrer un jeu de signaux de mesure $(M_j^{1h})$. En pratique, il n'est pas exclu qu'un même capteur physique délivre plusieurs jeux de tels signaux. Il constitue alors plusieurs capteurs, au sens de la présente invention.
Il a été fait référence dans tout le descriptif à l'utilisation d'un filtre de type PDAF. On pourra également utiliser des filtres de poursuite utilisant des méthodes Bayésiennes, en particulier les variantes du PDAF connues de l'homme du métier (JPDAF, JPDAM ...), ainsi que leur mise en oeuvre dans des concepts multimodes interactifs (I.M.M.).
L'apprentissage des couples de fonctions $(F_i(M_j^{1h}), D_{ij}^{1h})$ peut correspondre à la mise en mémoire, une fois pour toutes de données correspondant aux capteurs concernés. Il peut également être évolutif, c'est à dire enrichi au fur et à mesure de l'expérience acquise.
Par ailleurs, il a été donné ci-dessus deux cas (Cas 1 et Cas 2), pour l'application de la théorie de l'évidence. Ces cas sont actuellement considérés par le Demandeur comme les deux seuls cas optimaux, que l'on peut tirer de la théorie de l'évidence. La présente invention n'est pas strictement limitée à ces deux cas, car l'homme du métier pourra déterminer d'autres formules, sous-optimales, qui pourraient convenir, au moins pour certaines applications spécifiques.

**Revendications**

**1.** Procédé de poursuite de la trajectoire de mobiles, du type dans lequel :

a) on prévoit un ou plusieurs capteurs $(S_j^1)$, qui délivrent des signaux $(M_j^{1h})$ relatifs à la présence d'au moins un mobile, en référence à un découpage connu de l'espace, propre à chaque groupe de capteurs, en cases de résolution spatiales $(X^{1h})$;

b) on sélectionne, par des tests logiques propres à chaque capteur, certains de ces signaux ($M_j^{1h}$) en fonction d'un critère choisi de fenêtrage, portant sur les cases de résolution ($X^{1h}$);

c) on élabore une estimée de la probabilité ($\beta k$) qu'a un mobile de se trouver dans une case ($Xk$), qui est l'intersection des cases de résolution ($X^{1h}$) propres à chaque capteur ($S_j^1$), en fonction des signaux sélectionnés selon b), et de données de poursuite ($\alpha k$);

d) on applique cette probabilité ($\beta k$) à un filtre adaptatif de poursuite (4), la sortie de ce filtre (4) fournissant un état estimé ($X*,P*$), et permettant une prédiction de trajectoire ($x,S$) pour au moins un mobile; et

e) on ajuste le critère choisi de fenêtrage en fonction de cette prédiction de trajectoire ($x,S$),

**caractérisé en ce que** l'étape c) comprend :

- c1) la mémorisation préalable de n jeux de J fonctions de distribution $F_i(M_j^{1h})$, ces n jeux étant respectivement relatifs à n identités $H_i$ de mobiles répertoriés (i = 1 à n; j = 1 à J), chacune de ces fonctions ($F_i(M_j^{1h})$) étant représentative de la probabilité a priori ($P(M_j^{1h}/H_i)$) d'observer la mesure ($M_j^{1h}$) dans la case de résolution ($X^{1h}$) du capteur ($S_j^1$) lorsqu'un mobile d'identité ($H_i$) est présenté à ce capteur, et étant assortie d'un coefficient ($D_{ij}^{1h}$) représentant le degré de confiance qui lui est conféré;

- c2) la détermination, à partir de chaque mesure ($M_j^{1h}$) et des couples ($F_i(M_j^{1h})$, $D_{ij}^{1h}$) stockés dans des mémoires, de grandeurs de vraisemblance ($A_{ij}^{1h}$, $B_{ij}^{1h}$), et ceci pour toutes les identités ($H_i$) répertoriées, où $A_{ij}^{1h}$ représente le ratio de vraisemblance entre les hypothèses "il y a un mobile d'identité $H_i$ dans la case $X^{1h}$" et "aucun mobile d'identité $H_i$ n'est présent dans la case $X^{1h}$", tandis que $B_{ij}^{1h}$ représente un facteur d'incertitude sur $A_{ij}^{1h}$;

- c3) la fusion, pour chaque case de résolution ($X^{1h}$) et chaque identité de mobile ($H_i$), de ces couples de grandeurs de vraisemblance ($A_{ij}^{1h},B_{ij}^{1h}$), obtenue sur l'ensemble des capteurs ($S_j^1$), en un couple unique de vraisemblance ($A_i^{1h}$, $B_i^{1h}$);

- c4) le calcul à partir des vraisemblances ($A_i^{1h}$; $B_i^{1h}$)) relatives à une même case de résolution ($X^{1h}$), de la vraisemblance ($Q^{1h}$) pour qu'il y ait dans cette case ($X^{1h}$) un mobile de même identité que le mobile poursuivi;

- c5) le calcul, à partir des vraisemblances ($Q^{1h}$) de chaque groupe de capteurs, pour chaque case ($Xk$), intersection des cases de résolution ($X^{1h}$) considérées, de la vraisemblance ($Qk$) pour qu'il y ait dans cette case ($Xk$) un mobile de même identité que le mobile poursuivi;

- c6) le calcul, à partir des ($Qk$) et de coefficients de poursuite ($ak$) délivrés par le filtre adaptatif de poursuite (4a), pour chaque case ($Xk$), de la probabilité a posteriori ($\beta K$) que le mobile poursuivi soit dans cette case ($Xk$).

2. Procédé selon la revendication 1, **caractérisé en ce que** le filtrage effectué par le filtre adaptatif de poursuite (4) est un filtrage de Kalman, du type "PDAF".

3. Procédé selon l'une des revendications précédentes, **caractérisé en ce que** les capteurs ($S_j^1$) sont répartis en groupes de même indice (1) dits "d'alignement", pour chacun desquels le découpage en cases spatiales ($X^{1h}$) est le même,

en ce que l'étape c) est conduite séparément au sein de chaque groupe de capteurs de même indice (1), puis on opère une fusion entre les mesures issues des groupes de capteurs de 1 différents afin de déterminer, à partir des vraisemblances $Q^{1h}$ propres à chaque groupe, une vraisemblance Qk, strictement de même type, portant sur une case de résolution Xk qui est l'intersection des $X^{1h}$ considérés, et cela pour toutes les cases Xk contenues dans la fenêtre de validation, et
en ce que l'étape d) est conduite pour chaque case Xk contenue dans la fenêtre de validation.

4. Procédé selon l'une des revendications précédentes, **caractérisé en ce que** l'étape d) prend en compte la probabilité de l'objet ($\beta k$) d'être dans une case Xk donnée, et celle ($\beta 0$) qu'il soit en dehors de la fenêtre de validation.

5. Procédé selon la revendication 1, caractérisé

en ce que les fonctions de distribution ($F_i(M_j^{1h})$) et les coefficients de confiance qui leur sont associés ($D_{ij}^{1h}$) résultent d'un apprentissage statistique supervisé préalable, et

en ce que les n fois J couples ($F_i(M_j^{1h})$, $D_{ij}^{1h}$) correspondent à des conditions d'observation particulières fonction de la météorologie, de l'heure, des saisons, de la géométrie d'observation, du type d'environnement, de la caractérisation physique des mobiles.

6. Procédé selon la revendication 5, **caractérisé en ce que** les n fois J couples ($F_i(M_j^{1h})$, $D_{ij}^{1h}$), correspondant à chaque condition particulière, sont stockés dans des mémoires (1) propres à une et une seule condition particulière.

7. Procédé selon l'une des revendications 5 et 6, **caractérisé en ce que** les conditions d'observation nominales en fonctionnement sont identifiées, pour chaque capteur ($S_j^1$), par une unité de calcul, qui sélectionne en conséquence les mémoires (1) dans lesquelles sont stockés les couples ($F_i(M_j^{1h})$, $D_{ij}^{1h}$) correspondant.

8. Procédé selon l'une des revendications précédentes, **caractérisé en ce qu'**un prétraitement par une première unité logique (2b) comprend un seuillage sur chaque signal en provenance de chaque capteur ($S_j^1$) pour éliminer les mesures insusceptibles de correspondre à un objet.

9. Procédé selon l'une des revendications précédentes, **caractérisé en ce que** les grandeurs de vraisemblance ($A_{ij}^{1h}$) et ($B_{ij}^{lh}$) sont calculées à l'aide d'expressions découlant de la théorie de l'évidence, en vertu de critères d'optimalité.

10. Dispositif de poursuite de la trajectoire de mobile, comprenant :

   a) un ou plusieurs capteurs ($S_j^1$), aptes à délivrer des signaux ($M_j^{1h}$) relatifs à la présence d'au moins un mobile, en référence à un découpage connu de l'espace, propre à chaque groupe de capteurs, en cases de résolution spatiale ($X^{1h}$) ;

   b) des mémoires (1), aptes à stocker lesdites fonctions de distribution ($F_i(M_j^{1h})$), ainsi que lesdits coefficients de confiance ($D_{ij}^{1h}$) associés à chacune des fonctions de distribution ($F_i(M_j^{1h})$);

   c) une unité de traitement local (2) propre à évaluer à partir de chaque mesure ($M_j^{1h}$) et à l'aide des couples ($F_i(M_j^{1h})$, $D_{ij}^{1h}$)) contenus dans les mémoires (1), la vraisemblance pour qu'il y ait un mobile d'identité donnée dans la case de résolution ($X^{1h}$) du capteur ($S_j^1$), et cela pour toutes les identités répertoriées a priori ($H_i$) pour les mémoires (1);

   d) une unité de fusion (3), apte à fusionner les vraisemblances délivrées par l'unité de traitement local (2), ainsi qu'à élaborer une seconde vraisemblance, de localisation du mobile poursuivi sur la base des observations effectuées à l'instant courant; et

   e) un filtre de poursuite (4), apte à calculer à partir des informations élaborées par les unités précédentes (2 et 3), l'état estimé du mobile qui fait l'objet du suivi de trajectoire.

11. Dispositif selon la revendication 10, **caractérisé en ce que** l'unité de traitement local (2) comprend en outre :

   - une unité de calcul, apte à identifier les conditions d'observation permettant de sélectionner les mémoires (1) qui contiennent les couples ($F_i(M_j^{1h})$, $D_{ij}^{1h}$)) les mieux adaptés, à partir des mesures ($M_j^{1h}$) et d'informations externes; et

   - une unité logique, apte à limiter le nombre de cases (Xk) à traiter.

12. Dispositif selon l'une des revendications 10 et 11, **caractérisé en ce que** l'unité de fusion (3) comprend :

   a) un premier groupe de multiplicateurs (3a), aptes à fusionner les vraisemblances ($A_{ij}^{1h}$, $B_{ij}^{1h}$) fournies par l'unité de calcul (2a), en une vraisemblance unique ($A_i^{1h}$, $B_i^{1h}$) strictement de même type;

   b) des unités de calcul secondaires (3b), aptes à élaborer à partir des vraisemblances ($A_i^{1h}$, $B_i^{1h}$) délivrées par les multiplicateurs (3a) communs à un même groupe de capteurs ($S_j^1$), la vraisemblance ($Q^{1h}$) pour qu'il y ait dans la case de résolution ($X^{1h}$) un mobile de même identité que le mobile poursuivi;

c) une seconde unité logique (3c), apte à déterminer par des tests logiques propres à la nature des capteurs considérés, les associations de cases de résolution ($X^{1h}$) entre les groupes de capteurs alignés, dont l'intersection (Xk) est à l'intérieur de la fenêtre de validation;

d) un second multiplicateur (3d), apte à déterminer une vraisemblance (Qk), à partir des différentes vraisemblances ($Q^{1h}$), portant sur une case de résolution (Xk) qui est l'intersection des ($X^{1h}$) considérés; et

e) une troisième unité de calcul (3e), apte à fournir à partir de l'ensemble des vraisemblances (Qk) et de coefficients de poursuite ($\alpha$k) délivrés par le filtre de poursuite (4), une grandeur ($\beta$k) représentative de la probabilité a posteriori qu'a le mobile poursuivi d'être dans cette case (Xk).

13. Dispositif selon l'une des revendications 10 à 12, **caractérisé en ce que** le filtre de poursuite (4) est un filtre de Kalman, du type PDAF.


## Patentansprüche

1. Verfahren zur Verfolgung des Wegs von beweglichen Körpern bzw. von Fahrzeugen, dessen Typ folgende Schritte umfasst:

a) man sieht einen oder mehrere Sensoren ($S_j^1$) vor, die das Vorhandensein wenigstens eines Fahrzeugs betreffende Signale ($M_j^{1h}$) liefern, bezogen auf eine für jede Sensorengruppe bekannte charakteristische Raumaufteilung in räumliche Auflösungsfelder ($X^{1h}$);
b) man selektiert einige dieser Signale ($M_j^{1h}$) durch logische, für jeden Sensor charakteristische Tests in Abhängigkeit von einem gewählten Fensterbiidungs-Kriferium, das die Auflösungsfelder ($X^{1h}$) betrifft;
c) man erstellt eine Schätzung bezüglich der Wahrscheinlichkeit ($\beta$k) eines Fahrzeug, sich in einem Feld (Xk) zu befinden, das die Überschneidung der für jeden Sensor ($S_j^1$) charakteristischen Auflösungsfelder ($X^{1h}$) ist, abhängig von den gemäß b) selektierten Signalen und von Verfolgungsdaten ($\alpha$k);
d) man wendet diese Wahrscheinlichkeit ($\beta$k) auf ein adaptives Verfolgungsfilter (4) an, wobei der Ausgang dieses Filters (4) einen geschätzten Zustand (X*, P*) liefert und eine Wegvoraussage (x,S) für wenigstens ein Fahrzeug ermöglicht; und
e) man passt das gewählte Fensterbildungs-Kriterium in Abhängigkeit von dieser Wegvoraussage (x,S) an,

**dadurch gekennzeichnet**, dass der Schritt c) umfasst:

- c1) die vorausgehende Abspeicherung von n Sätzen von J Verteilungsfunktionen $F_i(M_j^{1h})$, wobei diese n Sätze jeweils n Identitäten $H_i$ von registrierten Fahrzeugen betreffen (i = 1 bis n; j = 1 bis J), jede dieser Funktionen ($F_i(M_j^{1h})$) repräsentativ ist für die apriorische Wahrscheinlichkeit ($P(M_j^{1h}/H_i)$, die Messung ($M_j^{1h}$) in dem Auflösungsfeld ($X^{1h}$) des Sensors ($S_j^1$) zu beobachten, wenn ein Fahrzeug der Identität ($H_i$) diesem Sensor präsentiert wird, und versehen ist mit einem Koeffizienten ($D_{ij}^{1h}$), der den erteilten Vertrauensgrad darstellt;
- c2) die Bestimmung von Wahrscheinlichkeitsgrößen ($A_{ij}^{1h}, B_{ij}^{1h}$) aufgrund jeder Messung ($M_j^{1h}$) und der in Speichern abgespeicherten Paare ($F_i(M_j^{1h})$, $D_{ij}^{1h}$), und dies für alle registrierten Identitäten ($H_i$), wo $A_{ij}^{1h}$ die Wahrscheiniichkeits-Verhältniszahl zwischen den Hypothesen «es gibt ein Fahrzeug der Identität $H_i$ in dem Feld $X^{1h}$» und «es gibt kein Fahrzeug der Identität $H_i$ in dem Feld $X^{1h}$» ist, während $B_{ij}^{1h}$ einen Unsicherheitsfaktor bezüglich $A_{ij}^{1h}$ darstellt;
- c3) die Verschmelzung dieser Wahrscheinlichkeits-Größenpaare ($A_{ij}^{1h}, B_{ij}^{1h}$) für jedes Auflösungsfeld ($X^{1h}$) und jede Fahrzeug-Identität ($H_i$), erhalten von der Gesamtheit der Sensoren ($Sj^1$), zu einem einzigen Wahrscheinlichkeitspaar;
- c4) die Berechnung der Wahrscheinlichkeit ($Q^{1h}$) aufgrund der ein selbes Auflösungsfeld betreffenden Wahrscheinlichkeiten ($A_i^{1h}, B_i^{1h}$), dass es in diesem Feld ($X^{1h}$) ein Fahrzeug derselben Identität wie das verfolgte Fahrzeug gibt;
- c5) die Berechnung der Wahrscheinlichkeit (Qk) aufgrund der Wahrscheinlichkeiten ($Q^{1h}$) jeder Sensorengruppe für jedes Feld (Xk), d.h. der Überschneidung der betreffenden Auflösungsfelder ($X^{1h}$), dass es in diesem Feld (Xk) ein Fahrzeug derselben Identität wie das verfolgte Fahrzeug gibt;
- c6) die Berechnung der aposteriorischen Wahrscheinlichkeit ($\beta$K) aufgrund der (Qk) und von Verfolgungskoeffizienten ($\alpha$k) für jedes Feld (Xk), geliefert durch das adaptive Verfolgungsfilter (4a), dass das verfolgte Fahrzeug sich in diesem Feld (Xk) befindet.

2. Verfahren nach Anspruch 1, **dadurch gekennzeichnet**, dass das durch das adaptive Verfolgungsfilter (4) ausgeführte Filtern ein Kalman-Filtern des Typs "PDAF" ist.

3. Verfahren nach einem der vorangehenden Ansprüche, **dadurch gekennzeichnet**,

dass die Sensoren ($S_j^i$) aufgeteilt sind in Gruppen mit demselben Index (1), "Ausrichtungsgruppen" genannt, wobei für jede von diesen die Aufteilung in räumliche Felder ($X^{1h}$) dieselbe ist,
dass der Schritt c) separat innerhalb jeder Gruppe von Sensoren mit demselben Index (1) durchgeführt wird, man dann eine Verschmelzung zwischen den von den verschiedenen Sensorengruppen von 1 stammenden Messungen vornimmt, um aufgrund der für jede Gruppe charakteristischen Wahrscheinlichkeiten $Q^{1h}$ eine Wahrscheinlichkeit Qk genau desselben Typs zu bestimmen, die sich auf ein Auflösungsfeld Xk bezieht, das die Überschneidung der betreffenden $X^{1h}$ ist, und dies für alle in dem Validierungsfenster enthaltenen Felder Xk, und
dass der Schritt d) für jedes der in dem Validierungsfenster enthaltenen Felder Xk durchgeführt wird.

4. Verfahren nach einem der vorangehenden Ansprüche, **dadurch gekennzeichnet**, dass der Schritt d) der Wahrscheinlichkeit Rechnung trägt, dass das Objekt sich in einem bestimmten Feld Xk befindet (βk), und außerdem der Wahrscheinlichkeit(β0), dass es sich außerhalb des Validierungsfensters befindet.

5. Verfahren nach Anspruch 1, **dadurch gekennzeichnet**,

dass die Verteilungsfunktionen ($F_i(M_j^{1h})$ und die ihnen zugeordneten Vertrauenskoeffizienten ($D_{ij}^{1h}$) aus einem überwachten vorausgehenden statistischen Lernvorgang resultieren, und
dass die n mal J Paare ($F_i(M_j^{1h})$, $D_{ij}^{1h}$) speziellen Beobachtungsbedingungen entsprechen, die von der Meteorologie, der Tageszeit, den Jahreszeiten, der Beobachtungsgeometrie, des Umgebungstyps und der physischen Charakterisierung der Fahrzeuge abhängen.

6. Verfahren nach Anspruch 5, **dadurch gekennzeichnet**, dass die jeder speziellen Bedingung entsprechenden n mal J Paare ($F_i(M_j^{1h})$, $D_{ij}^{1h}$) in Speichern (1) abgespeichert werden, die einer und nur einer speziellen Bedingung entsprechen.

7. Verfahren nach einem der Ansprüche 5 und 6, **dadurch gekennzeichnet**, dass die nominalen Beobachtungs-Betriebsbedingungen für jeden Sensor ($S_j^1$) durch eine Recheneinheit identifiziert werden, die dementsprechend die Speicher (1) selektiert, in denen die entsprechenden Paare ($F_i(M_j^{1h})$, $D_{ij}^{1h}$) abgespeichert werden.

8. Verfahren nach einem der vorangehenden Ansprüche, **dadurch gekennzeichnet**, dass eine Vorverarbeitung durch eine erste logische Einheit (2b) bei jedem von jedem Sensor ($S_j^1$) stammenden Signal eine Schwellenwertprüfung umfasst, um die Messungen zu eliminieren, die wahrscheinlich keinem Objekt bzw. Fahrzeug entsprechen.

9. Verfahren nach einem der vorangehenden Ansprüche, **dadurch gekennzeichnet**, dass die Wahrscheinlichkeitsgrößen ($A_{ij}^{1h}$) und ($B_{ij}^{1h}$) mit Hilfe von der Evidenztheorie abgeleiteter Ausdrücke berechnet werden, auf Grund von Optimalitäts- bzw. Optimierungskriterien.

10. Vorrichtung zur Verfolgung des Wegs von beweglichen Körpern bzw. von Fahrzeugen, umfassend:

a) ein oder mehrere Sensoren ($S_j^1$), fähig das Vorhandensein wenigstens eines Fahrzeugs betreffende Signale ($M_j^{1h}$) zu liefern, bezogen auf eine für jede Sensorengruppe bekannte charakteristische Raumaufteilung in räumliche Auflösungsfelder ($X^{1h}$);
b) Speicher (1), fähig die genannten Verteilungsfunktionen ($F_i(M_j^{1h})$ sowie die jeder der Verteilungsfunktionen ($F_i(M_j^{1h})$ zugeordneten genannten Vertrauenskoeffizienten ($D_{ij}^{1h}$) abzuspeichern;
c) eine lokale Verarbeitungseinheit (2), um aufgrund jeder Messung ($M_j^{1h}$) und mit Hilfe der in den Speichern (1) enthaltenen Paare ($F_i(M_j^{1h})$, $D_{ij}^{1h}$) die Wahrscheinlichkeit, dass ein Fahrzeug von bestimmter Identität sich in dem Auflösungsfeld ($X^{1h}$) des Sensors ($S_j^1$) befindet, zu bewerten und dies für alle für die Speicher (1) a apriori registrierten Identitäten ($H_i$);
d) eine Verschmelzungseinheit (3), fähig die durch die lokale Verarbeitungseinheit (2) gelieferten Wahrscheinlichkeiten zu verschmelzen sowie eine zweite Wahrscheinlichkeit der Lokalisierung des auf der Basis der zum laufenden Zeitpunkt durchgeführten Beobachtungen verfolgten Fahrzeugs zu erarbeiten; und
e) ein Verfolgungsfilter (4), fähig aufgrund der durch die vorhergehenden Einheiten (2 und 3) erarbeiteten Informationen den geschätzten Zustand des Fahrzeugs zu berechnen, das Gegenstand der Wegnachführung ist.

**11.** Vorrichtung nach Anspruch 10, **dadurch gekennzeichnet**, dass die lokale Verarbeitungseinheit (2) außerdem umfasst:

- eine Recheneinheit, fähig die Beobachtungsbedingungen zu identifizieren, die ermöglichen, die Speicher (1), die die am besten angepassten Paare $(F_i(M_j^{1h}), D_{ij}^{1h})$ enthalten, aufgrund der Messungen $(M_j^{1h})$ und äußerer Informationen zu selektieren; und
- eine logische Einheit, fähig die Anzahl der zu verarbeitenden Felder (Xk) zu begrenzen.

**12.** Vorrichtung nach einem der Ansprüche 10 und 11, **dadurch gekennzeichnet**, dass die Verschmelzungseinheit (3) umfasst:

a) eine erste Gruppe von Multiplizierern (3a), fähig die Wahrscheinlichkeiten $(A_{ij}^{1h}, B_{ij}^{1h})$, geliefert durch die Recheneinheit (2a), in eine einzige Wahrscheinlichkeit $(A_i^{1h}, B_i^{1h})$ genau desselben Typs zu verschmelzen;
b) sekundäre Recheneinheiten (3b), fähig aufgrund der Wahrscheinlichkeiten $(A_i^{1h}, B_i^{1h})$, geliefert durch die einer selben Gruppe von Sensoren $(S_j^1)$ gemeinsamen Multiplizierer (3a), die Wahrscheinlichkeit $(Q^{1h})$ dafür auszuarbeiten, dass es in dem Auflösungsfeld $(X^{1h})$ ein Fahrzeug derselben Identität wie das verfolgte Fahrzeug hat;
c) eine zweite logische Einheit (3c), fähig durch logische, für die Art der betreffenden Sensoren charakteristische Tests die Assoziierungen von Auflösungsfeldem $(X^{1h})$ zwischen den Gruppen von ausgerichteten Sensoren zu bestimmen, deren Überschneidung (Xk) sich innerhalb des Validierungsfensters befindet;
d) einen zweiten Multiplizierer (3d), fähig eine Wahrscheinlichkeit (Qk) aufgrund der verschiedenen Wahrscheinlichkeiten $(Q^{1h})$ zu bestimmen, bezogen auf ein Auflösungsfeld (Xk), das die Überschneidung der betreifenden $(X^{1h})$ ist; und
e) eine dritte Recheneinheit (3e), fähig aufgrund der Gesamtheit der Wahrscheinlichkeiten (Qk) und von Verfolgungskoeffizienten ($\alpha$k), geliefert durch das Verfolgungsfilter (4), eine Größe ($\beta$k) zu liefern, die repräsentativ ist für die aposteriorische Wahrscheinlichkeit, dass das verfolgte Fahrzeug sich in diesem Feld (Xk) befindet.

**13.** Vorrichtung nach einem der Ansprüche 10 bis 12, **dadurch gekennzeichnet**, dass das Verfolgungsfilter (4) ein Kalman-Filter des Typs PDAF ist.

## Claims

**1.** Method for pursuit of the trajectory of moving bodies, of the type in which:

a) there are provided one or a plurality of sensors $(S_j^1)$, which emit signals $(M_j^{1h})$ relative to the presence of at least one moving body, with reference to a known area of space, which is specific to each group of sensors, in spatial resolution compartments $(X^{1h})$ ;

b) by means of logic tests which are specific to each sensor, there is selection of some of these signals $(M_j^{1h})$, according to a selected windowing criterion, which relates to the resolution compartments $(X^{1h})$;

c) an estimate is produced of the probability ($\beta$k) which a moving body has, of being in a compartment (Xk), which is the intersection of the resolution compartments $(X^{1h})$ specific to each sensor $(S_j^1)$, in accordance with signals selected according to b), and with pursuit data (ak);

d) this probability ($\beta$k) is applied to an adaptive pursuit filter (4), the output of this filter (4) supplying an estimated state (X*,P*), and permitting a prediction of trajectory (x,S) for at least one moving body; and

e) the selected windowing criterion is adjusted according to this prediction of trajectory (x,s),

**characterised in that** step c) comprises:

- c1) prior storage of n sets of J functions of distribution $F_i(M_j^{1h})$, these n sets relating respectively to n identities $H_i$ of moving bodies documented (i = 1 to n; j = 1 to J) , each of these functions $(F_i(M_j^{1h}))$ being representative

of the probability a priori ($P(M_j^{1h}/H_i)$) of observing the measurement ($M_j^{1h}$) in the resolution compartment ($X^{1h}$) of the sensor ($S_j^1$), when a moving body with a given identity ($H_i$) is presented to this sensor, and being provided with a coefficient ($D_{ij}^{1h}$) which is representative of the level of confidence allocated to this observation;

- c2) determination, on the basis of each measurement ($M_j^{1h}$) and of the pairs ($F_i(M_j^{1h})$, $D_{ij}^{1h}$) stored in memories, of probability values ($A_{ij}^{1h}$, $B_{ij}^{1h}$), for all the identities ($H_i$) documented, in which $A_{ij}^{1h}$ represents the ratio of probability between the hypotheses "there is a moving body with the identity $H_i$ in the compartment $X^{1h}$", and "no moving body with the identity $H_i$ is present in the compartment $x^{1h}$", whereas $B_{ij}^{1h}$ represents a factor of uncertainty relating to $A_{ij}^{1h}$;

- c3) merging, for each resolution compartment ($x^{1h}$) and for each moving body identity ($H_i$), of these pairs of probability values ($A_{ij}^{1h}$, $B_{ij}^{1h}$), obtained for all the sensors ($S_j^i$), in a unique probability pair ($A_i^{1h}$, $B_i^{1h}$) ;

- c4) calculation, from the probabilities ($A_i^{1h}$, $B_i^{1h}$) relating to a single resolution compartment ($x^{1h}$), of the probability ($Q^{1h}$) of a moving body with the same identity as the moving body pursued being in this compartment ($x^{1h}$) ;

- c5) calculation, from the probabilities ($Q^{1h}$) of each group of sensors, for each compartment ($xk$), with intersection of the resolution compartments ($x^{1h}$) concerned, of the probability ($Qk$) of a moving body with the same identity as the moving body pursued being in this compartment ($xk$); and

- c6) calculation, from the ($Qks$) and coefficients of pursuit ($ak$) by the adaptive pursuit filter (4a), for each compartment ($xk$), of the probability a posteriori ($\beta k$) of the moving body pursued being in this compartment ($xk$).

2. Method according to claim 1, **characterised in that** the filtering carried out by the adaptive pursuit filter (4) is Kalman filtering, of the "PDAF" type.

3. Method according to either of the preceding claims, **characterised in that** the sensors ($S_j^1$) are distributed in groups with the same index (1) known as "of alignment", for each of which the area in spatial compartments ($x^{1h}$) is the same;

in that step c) is conducted separately within each group of sensors with the same index (1), then merging is carried out between the measurements obtained from the different groups of sensors (1), in order, from the probabilities $Q^{1h}$ which are specific to each group, to determine a probability $Qk$, which is strictly of the same type, relating to a resolution compartment $xk$, which is the intersection of the $x^{1h}$s concerned, for all the compartments $xk$ contained in the validation window; and
in that step d) is carried out for each compartment $xk$ contained in the validation window.

4. Method according to any one of the preceding claims, **characterised in that** step d) takes into account the probability of the object ($\beta k$) being in a given compartment $xk$, and that ($\beta 0$) of it being outside the validation window.

5. Method according to claim 1, **characterised in that** the distribution functions ($F_i(M_j^{1h})$) and the coefficients of confidence ($D_{ij}^{1h}$) which are associated with them, are derived from prior monitored statistical learning, and in that the n times J pairs ($F_i(M_j^{1h})$, $D_{ij}^{1h}$) correspond to specific observation conditions, which are dependent on the meteorology, the time, the seasons, the geometry of observation, the type of environment, and the physical characterisation of the moving bodies.

6. Method according to claim 5, **characterised in that** the n times J pairs ($F_i(M_j^{1h})$, $D_{ij}^{1h}$), corresponding to each particular condition, are stored in memories (1) which are specific to a single particular condition only.

7. Method according to claim 5 or claim 6, **characterised in that** the nominal conditions of observation during functioning, are identified, for each sensor ($S_j^1$), by a calculation unit, which selects accordingly the memories (1) in which the corresponding pairs ($F_i(M_j^{1h})$, $D_{ij}^{1h}$) are stored.

8. Method according to any one of the preceding claims, **characterised in that** pre-processing by a first logic unit (2b) comprises thresholding on each signal obtained from each sensor ($S_j^1$), in order to eliminate the measurements which are not likely to correspond to an object.

**9.** Method according to any one of the preceding claims, **characterised in that** the probability values ($A_{ij}^{1h}$) and ($B_{ij}^{1h}$) are calculated by means of expressions obtained by the theory of the evidence, by virtue of criteria of optimality.

**10.** Device for pursuit of the trajectory of moving bodies, comprising:

a) one or a plurality of sensors ($S_j^1$), which can provide signals ($M_j^{1h}$) relative to the presence of at least one moving body, with reference to a known area of space, which is specific to each group of sensors, in spatial resolution compartments ($X^{1h}$);

b) memories (1), which can store the said distribution functions ($F_i(M_j^{1h})$), as well as the said coefficients of confidence ($D_{ij}^{1h}$) which are associated with each of the distribution functions ($F_i(M_j^{1h})$);

c) a local processing unit (2), which, on the basis of each measurement ($M_j^{1h}$), and by means of the pairs ($F_i(M_j^{1h})$, $D_{ij}^{1h}$) contained in the memories (1), can evaluate the probability of there being a moving body with a given identity in the resolution compartment ($x^{1h}$) of the sensor ($S_j^1$), for all the identities documented a priori ($H_i$) for the memories (1);

d) a unit (3) for merging, which can merge the probabilities provided by the local processing unit (2), and can process a second probability, for location of the moving body pursued, on the basis of the observations made at the current moment; and

e) a pursuit filter (4), which, on the basis of the information processed by the preceding units (2 and 3), can calculate the estimated state of the moving body which forms the basis of the trajectory-following.

**11.** Device according to claim 10, **characterised in that** the local processing unit (2) additionally comprises:

- a calculation unit, which can identify the conditions of observation which make it possible to select the memories (1) which contain the most suitable pairs ($F_i(M_j^{1h})$, $D_{ij}^{1h}$), on the basis of the measurements ($M_j^{1h}$) and external information; and

- a logic unit, which can limit the number of compartments (xk) to be processed.

**12.** Device according to claim 10 and claim 11, **characterised in that** the unit (3) for merging comprises:

a) a first set of multipliers (3a), which can merge the probabilities ($A_{ij}^{1h}$, $B_{ij}^{1h}$) supplied by the calculation unit

(2a) into a single probability ($A_i^{1h}$, $B_i^{1h}$), which is strictly of the same type;

b) secondary calculation units (3b), which, on the basis of the probabilities ($A_i^{1h}$, $B_i^{1h}$) provided by the multipliers (3a) which are common to a single group of sensors ($S_j^1$), can process the probability ($Q^{1h}$) of there being a moving body with the same identity as the moving body pursued, in the resolution compartment ($x^{1h}$) ;

c) a second logic unit (3c), which, by means of logic tests which are specific to the nature of the sensors concerned, can determine the associations of resolution compartments ($x^{1h}$) between the groups of sensors aligned, the intersection (xk) of which is inside the validation window;

d) a second multiplier (3d), which can determine a probability (Qk), on the basis of the different probabilities ($Q^{1h}$) which relate to a resolution compartment (xk) which is the intersection of the ($x^{1h}$) concerned; and

e) a third calculation unit (3e), which, on the basis of all of the probabilities (Qk) and coefficients of pursuit (ak) provided by the pursuit filter (4), can supply a value ($\beta$k) which is representative of the probability a posteriori that the moving body pursued is in that compartment (xk).

**13.** Device according to any one of claims 10 to 12, **characterised in that** the pursuit filter (4) is a Kalman filter, of the PDAF type.

FIG.1

EP 0 675 374 B1

FIG. 2

EP 0 675 374 B1

FIG. 3

EP 0 675 374 B1